# EUROPÄISCHE PATENTSCHRIFT

(11) **EP 3 204 619 B1**
(45) Veröffentlichungstag und Bekanntmachung des Hinweises auf die Patenterteilung: **28.02.2018**
(21) Anmeldenummer: 15793680.8
(22) Anmeldetag: 09.10.2015
(51) Int. Cl.: F02K 3/06, F02C 7/04, F01D 21/04

(54) **FANGEHÄUSE FÜR EIN FLUGZEUGTRIEBWERK**
FAN CASE FOR AN AIRCRAFT ENGINE
CARTER DE SOUFFLANTE POUR MOTEUR D'AVION

(30) Priorität: 10.10.2014 AT 507232014
(43) Veröffentlichungstag der Anmeldung: 16.08.2017
(73) Patentinhaber: FACC AG, 4910 Ried im Innkreis (AT)
(72) Erfinder: FÜRST, Walter, 4910 Ried im Innkreis (AT); HAUGENEDER, Ernst, 4910 Ried im Innkreis (AT); HOREJSI, Konstantin, 4910 Ried im Innkreis (AT); STUBNA, Boris, 4910 Ried im Innkreis (AT); HÖLLRIGL, Andreas, 4910 Ried im Innkreis (AT)
(74) Vertreter: Sonn & Partner Patentanwälte
(86) Internationale Anmeldenummer: PCT/AT2015/050251
(87) Internationale Veröffentlichungsnummer: WO 2016/054669

(56) Entgegenhaltungen:
- EP-A2- 2 434 105
- FR-A1- 2 925 118
- GB-A- 2 426 287
- GB-A- 2 442 112

## Beschreibung

Die Erfindung betrifft ein Fangehäuse bzw. Bläsergehäuse für ein Flugzeugtriebwerk im Bereich dessen Fans, mit mehreren im Wesentlichen zylindrisch angeordneten und miteinander verbundenen Schichten aus faserverstärktem Kunststoff, wobei zwischen einer Innenschicht und einer Außenschicht eine Verstärkungslage aus glasfaserverstärktem Kunststoff angeordnet ist.

Fangehäuse von Flugzeugtriebwerken dienen dazu das Triebwerk im Bereich des Fans im Schadensfall des Abtrennens einer Schaufel des Fans vor Zerstörung zu sichern und die im Flugzeug befindlichen Passagiere vor einem Schaden zu bewahren. Die Materialien für derartige Fangehäuse müssen so gewählt werden, dass die hohe kinetische Energie der abgetrennten Fanschaufel aufgenommen werden kann. Während früher hauptsächlich Metalle, insbesondere hochduktile Stähle oder Titanlegierungen, für die Herstellung von Fangehäusen eingesetzt wurden, findet in jüngerer Zeit Kunststoff auch für diese Flugzeugkomponenten Anwendung.

Beispielsweise beschreibt die US 2012/0148392 A1 ein Fangehäuse für ein Flugzeugtriebwerk aus faserverstärktem Kunststoff, wobei mehrere miteinander verbundene Verbundwerkstoffschichten mit dazwischen angeordneten Wabenstrukturen kombiniert werden. Eine Ummantelung aus Kevlar® bietet einen entsprechenden Schutz im Schadensfall, wenn eine Fanschaufel abgetrennt wird und in das Triebwerkgehäuse eindringt.

Die US 2008/0128073 A1 beschreibt ein Fangehäuse für Flugzeugtriebwerke aus verschiedenen Kunststoffverbundwerkstoffen in Schichtenaufbau, wobei verschiedene Fasermaterialien und Kombinationen davon angewendet werden.

Die GB 2 426 287 A beschreibt ein Fangehäuse, bei dem zur Erfüllung der Sicherheitsanforderungen metallische Strukturen vorgesehen sind.

Die GB 2 442 112 A zeigt ein Fangehäuse mit einem Kern in Wabenstruktur, welche geringere Festigkeit aufweist und somit die Sicherheitsanforderungen nicht erfüllt.

Die EP 2 096 269 A2 und die EP 1 344 895 A2 beschreiben Triebwerksauskleidungen, welche zur Optimierung des Luftflusses innerhalb des Triebwerks dienen, jedoch keine Sicherheit im Schadensfall beim Bruch einer Fanschaufel bieten.

Viele Konstruktionen von Fangehäusen aus faserverstärktem Kunststoff sind relativ aufwendig in der Herstellung bzw. benötigen eine Vielzahl an Werkstoffschichten, wodurch der Gewichtsvorteil gegenüber metallenen Fangehäusen nicht mehr bzw. nur mehr in geringerem Ausmaß besteht.

Die Aufgabe der vorliegenden Erfindung besteht daher in der Schaffung eines Fangehäuses für ein Flugzeugtriebwerk, welches möglichst leicht und gleichzeitig sicher ist. Nachteile bekannter Vorrichtungen sollen vermieden oder zumindest reduziert werden.

Gelöst wird die erfindungsgemäße Aufgabe dadurch, dass die Außenschicht und die Innenschicht aus kohlenstofffaserverstärktem Kunststoff gebildet ist, die Verstärkungslage aus zumindest 20 Lagen aus glasfaserverstärktem Kunststoff besteht, und beiderseits der Verstärkungslage Deformationsschichten angeordnet sind, welche Deformationsschichten geringere Festigkeit aufweisen als die Verstärkungslage, und zwischen der Innenschicht und der Verstärkungslage im Bereich des Fans ein Ablenkring aus einem Material mit höherer Festigkeit als die Deformationsschichten angeordnet ist, wobei der Ablenkring einen keilförmigen Querschnitt mit einer zum Fan weisenden schrägen Fläche aufweist. Die Außenschicht und die Innenschicht des Fangehäuses sind aus kohlenstofffaserverstärktem Kunststoff gebildet. Insbesondere die Außenschicht des Fangehäuses wird aus entsprechend vielen Schichten aus kohlenstofffaserverstärktem Kunststoff gebildet, um dem Flugzeugtriebwerk im Schadensfall eine ausreichende Stabilität zu verleihen und ein sicheres Landen des Flugzeugs zu gewährleisten. Die erfindungsgemäße Konstruktion des Fangehäuses zeichnet sich dadurch aus, dass zumindest drei Schichten, nämlich die Innenschicht, die Verstärkungslage und die Außenschicht, vorgesehen sind, für welche spezielle Materialien verwendet werden, um die erfindungsgemäßen Aufgaben, nämlich der Schutz des Flugzeugtriebwerks im Schadensfall einerseits und die Bewahrung einer bestimmten Reststeifigkeit des Flugzeugtriebwerks für eine sichere Landung andererseits, zu erfüllen. Beim erfindungsgemäßen Fangehäuse werden die beiden Aufgaben auf zwei unterschiedliche Komponenten aufgeteilt, wodurch die Materialien dieser Komponenten an die jeweiligen Aufgaben optimal angepasst werden können. Die mittlere Verstärkungslage aus glasfaserverstärktem Kunststoff dient maßgeblich dazu eine abgetrennte Fanschaufel vor einem Durchtritt durch das Gehäuse zu bewahren und den Aufprall zu überstehen. Dementsprechend wird glasfaserverstärkter Kunststoff eingesetzt, der im Bezug auf einen Aufprall eines Fanteils die besten Eigenschaften aufweist. Durch die Anordnung von zumindest 20 Lagen aus glasfaserverstärktem Kunststoff werden die üblicherweise notwendigen Festigkeiten erzielt. Bei besonders hochdrehenden Flugzeugtriebwerken bzw. für kleinere Business Jets können auch mehr Lagen, beispielsweise 35 Lagen, erforderlich sein, um die Sicherheitsanforderungen zu erfüllen. Durch den Ablenkring aus einem Material mit höherer Festigkeit als die Deformationsschichten, kann die Sicherheit im Falle des Bruchs einer Fanschaufel erhöht werden bzw. Material bei der Innenschicht und/oder Verstärkungsschicht bei gleicher Sicherheit eingespart werden. Der Ablenkring dient dazu, die radial auftretenden quasi punktförmigen Kräfte seitlich abzulenken und somit einer Zerstörung des Fangehäuses bzw. Triebwerkgehäuses entgegenzuwirken. Durch den keilförmigen Querschnitt mit einer zum Fan weisenden schrägen Fläche des Ablenkrings kann die radial auftretende Kraft, welche von einem abgebrochenen Teil einer Fanschaufel ausgeht, seitlich abgelenkt und verteilt werden und in der Folge die Gefahr einer Zerstörung des Fangehäuses oder Triebwerkgehäuses und die Gefährdung des Flugzeugs und der Passagiere reduziert werden. Durch die Lage des Einbaus der Verstärkungslage mit den umgebenden Deformationsschichten innerhalb des Fangehäuses ist diese auch vor Beschädigungen, wie zum Beispiel durch Steinschläge, geschützt und es kann dadurch der Gewichtsvorteil erreicht werden. Die für eine sichere Landung im Schadensfall notwendige Reststeifigkeit wird hingegen maßgeblich durch die Außenschicht des Fangehäuses gewährleistet. Das gegenständliche Fangehäuse eignet sich besonders bevorzugt für Flugzeugtriebwerke mit sehr hoher Drehzahl (≥ 10000 Umdrehungen pro Minute), bei welcher die kinetische Energie eines abgetrennten Teils des Fans besonders hoch ist. Je nach Ausführung kann das Gewicht des Fangehäuses gegenüber Konstruktionen aus Stahl zwischen 30% und 50% und bei Konstruktionen aus Titan bis 10% reduziert werden.

Zumindest eine Deformationsschicht kann durch eine Wabenstruktur gebildet sein. Eine solche Wabenstruktur ist durch besonders niedriges Gewicht gekennzeichnet. Im Schadensfall wird die Deformationsschicht entsprechend verformt und zumindest die Außenschicht des Fangehäuses vor unzulässig großer Verformung bewahrt.

Zumindest eine Deformationsschicht kann auch durch Schaummaterial gebildet sein. Durch Wahl entsprechender Schaummaterialien und allenfalls einer Kombination mit der Deformationsschicht aus Wabenstruktur kann das Gewicht bzw. die Verformbarkeit weiter verbessert werden. Als Schaummaterialien kommen beispielsweise Kunststoffe, wie Acrylnitril-Butadien-Styrol-Copolymerisat (ABS), Polymethacrylimid (PMI) und dgl. zur Anwendung.

Vorteilhafterweise ist in der Außenschicht zumindest ein Befestigungsflansch integriert. Durch die Integration zumindest eines Befestigungsflansches, insbesondere zweier Befestigungsflansche (vorne und hinten), wird einerseits die Festigkeit des gesamten Fangehäuses erhöht, da keine Fügestellen zwischen dem Befestigungsflansch und der Außenschicht erforderlich sind, und andererseits der Montagevorgang vereinfacht.

An der Innenschicht des Fangehäuses kann im Bereich des Fans eine Schleifschicht aus verformbarem Material angeordnet sein. Durch eine derartige Schleifschicht aus verformbarem Material kann der Luftspalt zwischen dem Fan des Flugzeugtriebwerks und der Innenschicht des Fangehäuses noch weiter reduziert werden, da die Fanschaufel mit dem größten Außendurchmesser eine entsprechende Form in die Schleifschicht fräst.

Die Schleifschicht kann aus glasfaserverstärktem Harz oder gefüllten Honigwabenkernen gebildet werden. Derartige Materialien haben sich besonders bewährt und sind ausreichend weich gegenüber den üblicherweise aus Titan oder Titanlegierungen gebildeten Fanschaufeln.

Der Ablenkring ist vorzugsweise aus Metall, insbesondere Stahl, gebildet. Aufgrund der geringen Größe des Ablenkrings im Bezug auf das gesamte Fangehäuse ist der dadurch auftretende Gewichtsnachteil vernachlässigbar.

Alternativ dazu kann der Ablenkring auch aus aramidfaserverstärktem Kunststoff, z.B. Kevlar®, gebildet sein. Derartige faserverstärkte Kunststoffe weisen gegenüber Metallen ein geringeres Gewicht auf, sind jedoch auch entsprechend teurer.

Die Erfindung wird nachfolgend anhand eines Ausführungsbeispiels näher erläutert. Darin zeigen:
- Fig. 1: ein Flugzeugtriebwerk in teilweise geschnittener Anordnung mit einem im Bereich des Fans angeordneten Fangehäuse; und
- Fig. 2: einen Teil eines erfindungsgemäß ausgebildeten Fangehäuses in geschnittener Darstellung.

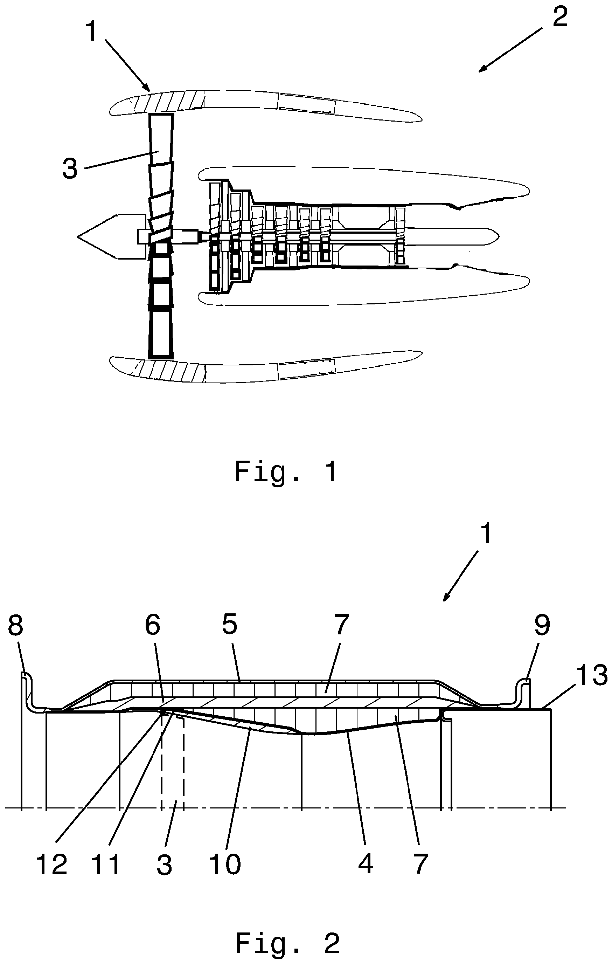

In Fig. 1 ist ein Flugzeugtriebwerk 2 in teilweise geschnittener Anordnung mit einem im Bereich des Fans 3 angeordneten Fangehäuse 1 dargestellt. Üblicherweise besteht ein Fangehäuse 1 aus einem zylindrischen Mantel mit integrierten bzw. daran befestigten Befestigungsflanschen und allfälligen Versteifungsrippen oder dgl. Das Fangehäuse 1 wird mit dem restlichen Triebwerkgehäuse verbunden, welches wiederum an entsprechenden Befestigungselementen, üblicherweise Tragflächen, angeordnet ist.

Fig. 2 zeigt einen Teil eines erfindungsgemäß ausgebildeten Fangehäuses 1 in geschnittener Darstellung. Das Fangehäuse 1 beinhaltet eine Innenschicht 4, welche entsprechend den aerodynamischen Anforderungen des Flugzeugtriebwerks 2 gestaltet ist, und eine Außenschicht 5 sowie eine zwischen der Innenschicht 4 und der Außenschicht 5 angeordnete Verstärkungslage 6 und beiderseits der Verstärkungslage 6 angeordnete Deformationsschichten 7. Die Verstärkungslage 6 ist aus glasfaserverstärktem Kunststoff in Abhängigkeit des Flugzeugtriebwerks 2 aus mindestens 20 Lagen gebildet und dient maßgeblich dazu einen Aufprall eines Teils des Fans 3 im Schadensfall zu überstehen. Die Deformationsschichten 7, welche durch eine Wabenstruktur oder geeignete Schaummaterialien oder Kombinationen davon gebildet sein können, dienen zur Aufnahme der von einem abgetrennten Teil des Fans 3 ausgehenden kinetischen Energie. Die Innenschicht 4 ist aus kohlenstofffaserverstärktem Kunststoff gebildet. Die Außenschicht 5, welche maßgeblich dazu dient die Restfestigkeit des Fangehäuses 1 im Schadensfall zu gewährleisten und eine sichere Landung mit dem beschädigten Flugzeugtriebwerk 2 zu ermöglichen, ist ebenfalls aus kohlenstofffaserverstärktem Kunststoff gebildet.

Zur Erleichterung des Herstellungs- und Montageaufwandes können die für die Befestigung des Fangehäuses 1 notwendigen Befestigungsflansche 8, 9 in der Außenschicht 5 integriert sein und in einem Herstellungsvorgang mit der Außenschicht 5 hergestellt werden. Durch die funktionelle Trennung der Verstärkungslage 6 und der Außenschicht 5 kann auch ein Aufreißen der Außenschicht 5, insbesondere im Bereich der Befestigungsflansche 8, 9, im Schadensfall verhindert werden oder zumindest die Gefahr einer Beschädigung reduziert werden.

Zur Verringerung des Luftspalts zwischen Fan 3 und Innenschicht 4 kann eine Schleifschicht 10 aus verformbarem Material im Bereich des Fans 3 angeordnet sein, in welche Schleifschicht 10 die Fanschaufel mit dem größten Außendurchmesser fräst, sodass ein verschwindender Luftspalt zwischen Fan 3 und Innenschicht 4 bzw. Schleifschicht 10 resultiert. Die Schleifschicht 10 kann aus glasfaserverstärktem Harz oder gefüllten Honigwabenkernen gebildet sein.

Im Bereich des Fans 3 ist zwischen der Innenschicht 4 und der Verstärkungslage 6 ein Ablenkring 11 aus einem Material mit höherer Festigkeit als die Deformationsschichten 7 angeordnet, über welchen Ablenkring 11 die im Schadensfall auftretenden radialen Kräfte seitlich abgelenkt werden. Der Ablenkring 11 kann aus Metall, insbesondere Stahl, oder auch aramidfaserverstärktem Kunststoff, beispielsweise Kevlar®, gebildet sein. Zur optimalen Ablenkung der radial wirkenden Kräfte weist der Ablenkring 11 wie dargestellt einen keilförmigen Querschnitt mit einer zum Fan 3 weisenden schrägen Fläche 12 auf.

Am hinteren Ende des Fangehäuses 1 kann ein Anbauelement 13 angeordnet und vorzugsweise mit der Innenschicht 4 verklebt sein.

## Patentansprüche

1. Fangehäuse (1) für ein Flugzeugtriebwerk (2) im Bereich dessen Fans (3), mit mehreren im Wesentlichen zylindrisch angeordneten und miteinander verbundenen Schichten aus faserverstärkem Kunststoff, wobei zwischen einer Innenschicht (4) und einer Außenschicht (5) eine Verstärkungslage (6) aus glasfaserverstärktem Kunststoff angeordnet ist, **dadurch gekennzeichnet, dass** die Außenschicht (5) und die Innenschicht (4) aus kohlenstofffaserverstärktem Kunststoff gebildet ist, die Verstärkungslage (6) aus zumindest 20 Lagen aus glasfaserverstärktem Kunststoff besteht, dass beiderseits der Verstärkungslage (6) Deformationsschichten (7) angeordnet sind, welche Deformationsschichten (7) geringere Festigkeit aufweisen als die Verstärkungslage (6), und dass zwischen der Innenschicht (4) und der Verstärkungslage (6) im Bereich des Fans (3) ein Ablenkring (11) aus einem Material mit höherer Festigkeit als die Deformationsschichten (7) angeordnet ist, wobei der Ablenkring (11) einen keilförmigen Querschnitt mit einer zum Fan (3) weisenden schrägen Fläche (12) aufweist.

2. Fangehäuse (1) nach Anspruch 1, **dadurch gekennzeichnet, dass** zumindest eine Deformationsschicht (7) durch eine Wabenstruktur gebildet ist.

3. Fangehäuse (1) nach Anspruch 1 oder 2, **dadurch gekennzeichnet, dass** zumindest eine Deformationsschicht (7) durch Schaummaterial gebildet ist.

4. Fangehäuse (1) nach einem der Ansprüche 1 bis 3, **dadurch gekennzeichnet, dass** in der Außenschicht (5) zumindest ein Befestigungsflansch (8, 9) integriert ist.

5. Fangehäuse (1) nach einem der Ansprüche 1 bis 4, **dadurch gekennzeichnet, dass** an der Innenschicht (4) im Bereich des Fans (3) eine Schleifschicht (10) aus verformbarem Material angeordnet ist

6. Fangehäuse (1) nach Anspruch 5, **dadurch gekennzeichnet, dass** die Schleifschicht (10) aus glasfaserverstärktem Harz gebildet ist.

7. Fangehäuse (1) nach einem der Ansprüche 1 bis 6, **dadurch gekennzeichnet, dass** der Ablenkring (11) aus Metall, insbesondere Stahl, gebildet ist.

8. Fangehäuse (1) nach einem der Ansprüche 1 bis 6, **dadurch gekennzeichnet, dass** der Ablenkring (11) aus aramidfaserverstärktem Kunststoff gebildet ist.

## Claims

1. Fan casing (1) for an aircraft engine (2) in the region of the fan (3) thereof, comprising a plurality of layers which are arranged in a substantially cylindrical manner, are interconnected and are made of fibre reinforced plastics material, a reinforcing ply (6) made of glass fibre reinforced plastics material being arranged between an inner layer (4) and an outer layer (5), **characterised in that** the outer layer (5) and the inner layer (4) are made of carbon fibre reinforced plastics material, the reinforcing ply (6) consists of at least 20 plies made of glass fibre reinforced plastics material, **in that** deformation layers (7) are arranged on either side of the reinforcing ply (6), which deformation layers (7) have a lower strength than the reinforcing ply (6), and **in that** a deflector ring (11) made of a material having a higher strength than the deformation layers (7) is arranged between the inner layer (4) and the reinforcing ply (6) in the region of the fan (3), the deflector ring (11) having a cuneiform cross section comprising an oblique surface (12) facing the fan (3).

2. Fan casing (1) according to claim 1, **characterised in that** at least one deformation layer (7) is formed by a honeycomb structure.

3. Fan casing (1) according to either claim 1 or claim 2, **characterised in that** at least one deformation layer (7) is formed of foam material.

4. Fan casing (1) according to any of claims 1 to 3, **characterised in that** at least one mounting flange (8, 9) is integrated into the outer layer (5).

5. Fan casing (1) according to any of claims 1 to 4, **characterised in that** an abrasive layer (10) made of ductile material is arranged on the inner layer (4) in the region of the fan (3).

6. Fan casing (1) according to claim 5, **characterised in that** the abrasive layer (10) is made of glass fibre reinforced resin.

7. Fan casing (1) according to any of claims 1 to 6, **characterised in that** the deflector ring (11) is made of metal, in particular steel.

8. Fan casing (1) according to any of claims 1 to 6, **characterised in that** the deflector ring (11) is made of aramid fibre reinforced plastics material.

## Revendications

1. Boîtier de ventilateur (1) pour un réacteur d'avion (2) au niveau de son ventilateur (3), avec plusieurs couches de matière plastique renforcée par des fibres, disposées de manière globalement cylindrique et reliées entre elles, une couche de renfort (6) en matière plastique renforcée par des fibres de verre étant disposée entre une couche interne (4) et une couche externe (5), **caractérisé en ce que** la couche externe (5) et la couche interne (4) sont constituées d'une matière plastique renforcée par des fibres de carbone, la couche de renfort (6) est constituée d'au moins 20 couches de matière plastique renforcée par des fibres de verre, **en ce que**, des deux côtés de la couche de renfort (6) sont disposées des couches de déformation (7), ces couches de déformation (7) présentant une résistance inférieure à la couche de renfort (6) et **en ce que**, entre la couche interne (4) et la couche de renfort (6), au niveau du ventilateur (3), une bague de déviation (11) en matériau avec une résistance supérieure aux couches de déformation (7) est disposée, la bague de déviation (11) présentant une section transversale cunéiforme avec une surface (12) oblique orientée vers le ventilateur (3).

2. Boîtier de ventilateur (1) selon la revendication 1, **caractérisé en ce qu'**au moins une couche de déformation (7) est constituée d'une structure en nids d'abeilles.

3. Boîtier de ventilateur (1) selon la revendication 1 ou 2, **caractérisé en ce qu'**au moins une couche de déformation (7) est constituée d'un matériau moussant.

4. Boîtier de ventilateur (1) selon l'une des revendications 1 à 3, **caractérisé en ce que**, dans la couche externe (5) est intégrée au moins une bride de fixation (8, 9).

5. Boîtier de ventilateur (1) selon l'une des revendications 1 à 4, **caractérisé en ce que**, sur la couche interne (4) au niveau du ventilateur (3), est disposée une couche abrasive (10) en matériau déformable.

6. Boîtier de ventilateur (1) selon la revendication 5, **caractérisé en ce que** la couche abrasive (10) est constituée d'une résine renforcée par des fibres de verre.

7. Boîtier de ventilateur (1) selon l'une des revendications 1 à 6, **caractérisé en ce que** la bague de déviation (11) est constituée de métal, plus particulièrement d'acier.

8. Boîtier de ventilateur (1) selon l'une des revendications 1 à 6, **caractérisé en ce que** la bague de déviation (11) est constituée d'une matière plastique renforcée par des fibres aramides.
